(19) Europäisches Patentamt
European Patent Office
Office européen des brevets

(11) **EP 4 738 230 A1**

(12) **EUROPEAN PATENT APPLICATION**
published in accordance with Art. 153(4) EPC

(43) Date of publication:
**06.05.2026 Bulletin 2026/19**

(21) Application number: **24831489.0**

(22) Date of filing: **21.05.2024**

(51) International Patent Classification (IPC):
*G06Q 50/02* (2024.01)    *A01G 7/00* (2006.01)

(52) Cooperative Patent Classification (CPC):
**A01G 7/00; G06Q 50/02**

(86) International application number:
**PCT/JP2024/018728**

(87) International publication number:
**WO 2025/004617 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2023 JP 2023106294**

(71) Applicant: **Kubota Corporation**
**Osaka 556-8601 (JP)**

(72) Inventors:
• **NAMBU, Masahito**
  **Sakai-shi, Osaka 590-0908 (JP)**
• **SASAMOTO, Hirokazu**
  **Sakai-shi, Osaka 590-0908 (JP)**
• **TANAKA, Satoshi**
  **Sakai-shi, Osaka 590-0908 (JP)**

(74) Representative: **Cabinet Beau de Loménie**
**103, rue de Grenelle / CS 90800**
**75340 Paris Cedex 07 (FR)**

(54) **INFORMATION PROCESSING DEVICE, HARVESTING RANGE SELECTION METHOD, AND COMPUTER PROGRAM**

(57)    A device according to the present disclosure is an information processing device including a storage device that stores value data representing a crop value of a crop for each planting position, and a control device that executes selection processing of a harvest range on the basis of the value data, in which the selection processing includes processing of calculating a harvestable area in which a work subject is allowed to execute harvesting in a predetermined period, and processing of allocating the harvestable area to the planting position where the crop value is equal to or more than a predetermined threshold.

FIG. 2

## Description

### TECHNICAL FIELD

The present disclosure relates to an information processing device, a selection method of a harvest range, and a computer program. The present application claims priority based on Japanese Patent Application No. 2023-106294 filed on June 28, 2023, the entire contents of which are incorporated herein by reference.

### BACKGROUND ART

Patent Literature 1 describes an information proposal system that proposes a harvest time and a yield of a crop based on a predicted sales price of the crop in a market and a growth state of the crop obtained from image analysis. Patent Literature 2 describes an agricultural management support system that efficiently allocates workers that perform work and equipment in a plurality of farm fields located at distant positions from previously registered workers and equipment.

### CITATION LIST

[PATENT LITERATURE]

PATENT LITERATURE 1: WO 2018/158821 A
PATENT LITERATURE 2: Japanese Laid-Open Patent Publication No. 2013-254356

### SUMMARY OF THE INVENTION

An information processing device according to an aspect of the present disclosure includes a storage device that stores value data representing a crop value of a crop for each planting position, and a control device that executes selection processing of a harvest range on the basis of the value data, in which the selection processing includes processing of calculating a harvestable area in which a work subject is allowed to execute harvesting in a predetermined period, and processing of allocating the harvestable area to the planting position where the crop value is equal to or more than a predetermined threshold.

Embodiments of the present disclosure can be implemented by a device, a system, a method, an integrated circuit, a computer program, a computer-readable non-transitory recording medium, or any combination thereof.

The properties of the recording medium may be either volatile or nonvolatile. The device may include a plurality of individual devices. In the case of a configuration including a plurality of individual devices, the devices may be arranged in one housing, or may be arranged separately in two or more separate housings.

### BRIEF DESCRIPTION OF DRAWINGS

[FIG. 1] FIG. 1 is a network configuration diagram illustrating an overall configuration of a work support system.
[FIG. 2] FIG. 2 is a block diagram illustrating a configuration example of a management server.
[FIG. 3] FIG. 3 is an explanatory diagram illustrating an example of selection processing of a harvest range.
[FIG. 4] FIG. 4 is an explanatory diagram illustrating an example of generation processing of an achievement characteristic.
[FIG. 5] FIG. 5 is a sequence diagram illustrating a use example of selection processing in a work plan.
[FIG. 6] FIG. 6 is a diagram illustrating an example of a display screen of a selection result in the management terminal.
[FIG. 7] FIG. 7 is a sequence diagram illustrating a first use example of an achievement characteristic in a work plan.
[FIG. 8] FIG. 8 is a sequence diagram illustrating a second use example of an achievement characteristic in a work plan.
[FIG. 9] FIG. 9 is an explanatory diagram illustrating an example of a prediction method of future growth data.

### DETAILED DESCRIPTION

<Problems to be Solved by Present Disclosure>

In Patent Literature 1 and Patent Literature 2, a harvest range selection method for appropriately distributing labor force of a work subject according to the crop value when a crop is harvested is not assumed.

In view of such conventional problems, an object of the present disclosure is to enable appropriate allocation of labor force of a work subject.

<Effects of Present Disclosure>

According to the present disclosure, labor force of a work subject can be appropriately allocated.

<Outline of Embodiment of Present Disclosure>

Hereinafter, an outline of embodiments of the present disclosure will be listed and described.

(1) A device according to the present embodiment is an information processing device including a storage device that stores value data representing a crop value of a crop for each planting position, and a control device that executes selection processing of a harvest range on the basis of the value data, in which the selection processing includes processing of calculating a harvestable area in which a work subject is allowed to execute harvesting in a predetermined period, and processing of allocating the harvestable area to the planting position where the crop value is equal to or more than a predetermined threshold.

With the information processing device of the present embodiment, since the control device allocates the harvestable area to the planting position where the crop value is equal to or more than the predetermined threshold, the planting position where the crop value is less than the threshold is excluded from the allocation target, and the harvest work of the crop having a low crop value can be avoided. Therefore, the labor force of the work subject can be appropriately allocated.

(2) In the information processing device of the present embodiment, the selection processing may include processing of preferentially allocating the harvestable area to the planting position having a high crop value.

In this case, since the planting position having the highest crop value is included in the harvest range, crops having a high crop value can be harvested early.

(3) In the information processing device of the present embodiment, the selection processing may include processing of arbitrarily selecting a first planting position as the planting position, and preferentially allocating second and subsequent planting positions that are close in distance from the first planting position.

In this case, since the allocation target is determined on the basis of the distance in the second and subsequent planting positions, it is possible to select the harvest range in which the movement distance of the work subject is short.

(4) In the information processing device of the present embodiment, the selection processing may include processing of calculating the harvestable area on the basis of a harvest time during which the work subject is allowed to execute harvesting, harvest efficiency of the work subject, and a total number of the work subjects.

In this manner, the harvestable area can be accurately calculated according to the labor force that can be input during the predetermined period.

(5) In the information processing device of the present embodiment, the storage device may store growth data indicating a growth degree of the crop for each of the planting positions, and the control device may include processing of converting the growth data into the value data.

In this case, since the value data is generated from the actual growth data, the value data can be accurately generated.

(6) In the information processing device of the present embodiment, the control device may output the value data including the harvest range that has been selected as a selection result.

In this case, for example, by displaying the output selection result (value data including the harvest range) on the display, the user can determine at a glance from where in the farm field the harvest work should be performed.

(7) In the information processing device of the present embodiment, the control device may be capable of executing calculation processing of an achievement characteristic indicating a relationship between a high value yield and a harvest achievement defined below.

High value yield: Yield when harvest work is performed in descending order of crop values
Harvest achievement: Cumulative value of crop values when harvest work is performed in descending order of crop values

In this case, in addition to the above-described harvest range, it is possible to acquire the above-described achievement characteristics indicating characteristics of a harvest achievement with respect to a high value yield.

(8) In the information processing device of the present embodiment, the control device may calculate a harvestable amount that is a yield of the crop that is achievable during the predetermined period, and calculate a possible harvest achievement that is the harvest achievement corresponding to the harvestable amount on the basis of the harvestable amount and the achievement characteristic.

In this case, by notifying the user of the calculation result, it is possible to notify the user in advance of the maximum harvest achievement obtained with the currently available labor force.

(9) In the information processing device of the present embodiment, the control device may acquire a target harvest achievement that is the harvest achievement desired by a user, and calculate a target yield that is the high value yield corresponding to the target harvest achievement on the basis of the target harvest achievement and the achievement characteristic.

In this case, by notifying the user of the calculation result, it is possible to notify the user in advance of the high value yield necessary for achieving the desired harvest achievement.

(10) The selection method according to the present embodiment is a method of selecting a harvest range executed by the information processing device of (1) to (9) described above.

Therefore, the selection method of the present embodiment has the same effects as those of the information processing device (1) to (9) described above.

(11) A computer program according to the present embodiment is a computer program that causes a computer to function as the information processing device of (1) to (9) described above.

Therefore, the computer program of the present embodiment has the same functions and effects as those of the information processing device of (1) to (9) described above.

<Details of Embodiment of Present Disclosure>

Hereinafter, embodiments of the present disclosure will be described in detail with reference to the drawings. Note that at least some of the embodiments described below may be arbitrarily combined.

[Overall Configuration of System]

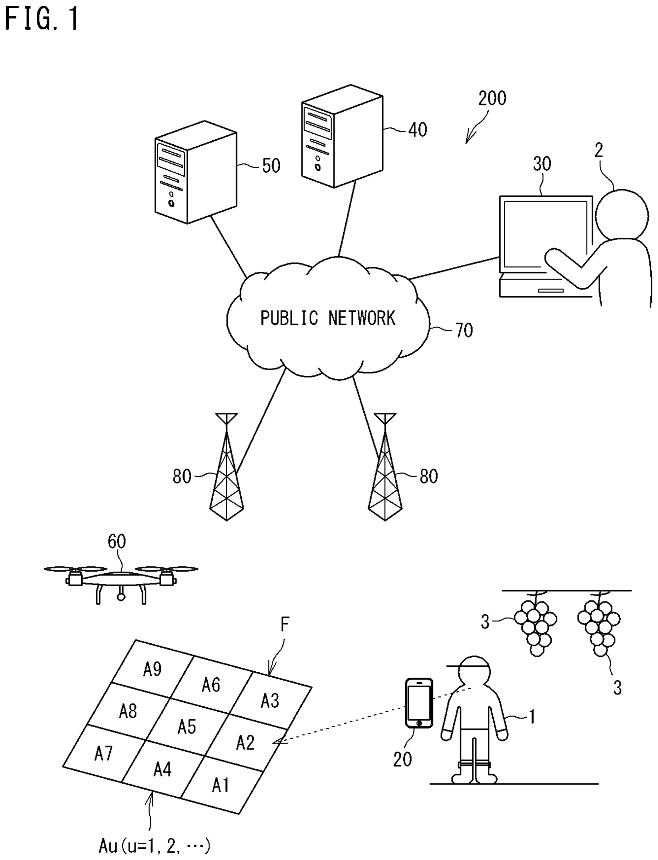

FIG. 1 is a network configuration diagram illustrating an overall configuration of a work support system 200.

A work support system (hereinafter, also referred to as an "support system") 200 in FIG. 1 is a system in which a mobile terminal 20, a management terminal 30, and a management server 40 cooperate to support farmwork performed by the worker 1. Therefore, the support system 200 includes at least the mobile terminal 20, the management terminal 30, and the management server 40 as communication nodes that exchange information.

The mobile terminal 20, the management terminal 30, and the management server 40 are connected by a public network 70 including the Internet and the like. However, the mobile terminal 20 is connected to the public network 70 via radio communication with a radio base station 80.

The mobile terminal 20 is a communication terminal assigned to the worker 1. The mobile terminal 20 is, for example, a smartphone, a tablet computer, a notebook computer, or the like. In the illustrated example, only one worker 1 is illustrated, but a plurality of workers 1 may be illustrated.

The management terminal 30 is a terminal device assigned to a management person (hereinafter, the user is referred to as an "management user") 2 of the farm F including a plurality of farm fields Au (u = 1, 2,......). In the illustrated example, one farm F includes nine farm fields Au, but the number of farm fields Au is arbitrary and only needs to be one or more.

The management terminal 30 is, for example, a desktop computer. The management terminal 30 may be a mobile terminal such as a smartphone, a tablet computer, or a laptop computer.

The management user 2 is a user of an agricultural work support service provided by the management server 40. The management user 2 is registered as a member in advance in the management server 40.

The farm fields Au of the present embodiment are, for example, vineyards for cultivating grapes 3 to be a raw material of wine. In the vineyards Au, grapes 3 of the same variety or grapes 3 of different varieties are cultivated.

In addition to the mobile terminal 20 and the management terminal 30, the management server 40 communicates with external devices such as an information provision server 50 and a flying device 60. The flying device 60 is connected to the public network 70 via radio communication with the radio base station 80.

The agricultural work support service of the management server 40 includes a service for providing the user with a work plan related to the farmwork of the vineyard Au. The management server 40 creates a work plan on the basis of predetermined input information received from the management terminal 30.

The "work plan" is a data group that defines a schedule (information including the contents of 5W1H) of work in the near future performed by the worker 1 in the vineyard Au. Examples of the farmwork of the vineyard Au include pruning, bud removal, training, gibberellin treatment, pinching, bagging, and harvesting.

When accessing the agricultural work support service of the management server 40, the management terminal 30 can transmit a creation request based on an input operation of the management user 2 to the management server 40. The creation request includes predetermined information (for example, the number of workers, a working time zone, and the like) necessary for the work plan creation processing.

The management server 40 creates a work plan of the vineyard Au in response to a creation request from the management terminal 30, and transmits the created work plan to the management terminal 30.

In addition, the management server 40 transmits work content of the worker 1 based on the created work plan to the mobile terminal 20 of each worker 1. However, the management terminal 30 may notify each mobile terminal 20 of the work content.

The information provided by the information provision server 50 includes growth data of the vineyard Au. The management server 40 can receive the growth data from the information provision server 50. The growth data is data indicating a "growth degree" of a crop (for example, grape 3) for each planting position.

As the growth degree, for example, a vegetation index such as normalized difference vegetation index (NDVI) can be adopted. NDVI is an index that expresses the status of vegetation with a relatively simple calculation formula based on the reflection characteristics of light of the plant.

The flying device 60 is, for example, a robot flying object such as a quadcopter or a multicopter. The flying device 60 is capable of flying over any area by remote control and includes a digital camera capable of switching an imaging direction.

When capturing the vineyard Au from above with the digital camera, the flying device 60 transmits the acquired image data to the management server 40. The management server 40 can also generate all or part of the growth data of the vineyard Au by itself using the received image data.

[Configuration Example of Management Server]

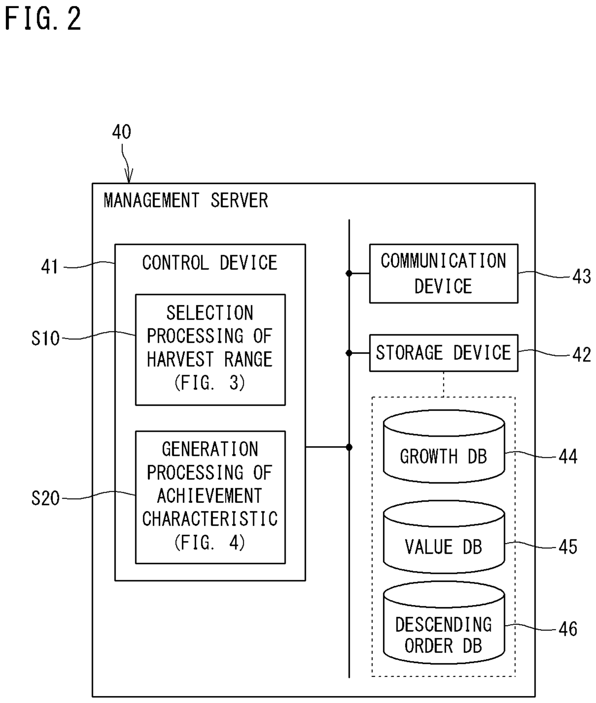

FIG. 2 is a block diagram illustrating a configuration example of the management server 40.

As illustrated in FIG. 2, the management server 40 is a type of information processing device including a control device 41, a storage device 42, a communication device 43, and a plurality of types of databases (DBs) 44 to 46.

The plurality of types of databases 44 to 46 is electronic data constructed in a predetermined data array in the storage device 42. Note that a part or all of the databases 44 to 46 may be constructed in an external storage device (not illustrated) connected to the management server 40.

The control device 41 is an arithmetic processing device including a central processing unit (CPU), a random access memory (RAM), and the like. The control device 41 may include an integrated circuit such as a field-programmable gate array (FPGA).

The control device 41 reads the computer program 47 stored in the storage device 42 into a main memory (RAM), and executes information processing according to the read program 47. The information processing includes creation of a work plan, generation of growth data, and the like.

The storage device 42 is an auxiliary storage device including a non-volatile memory such as a hard disk drive (HDD) and a solid state drive (SSD).

The storage device 42 may include a flash read only memory (ROM), a universal serial bus (USB) memory, an SD card, or the like. The communication device 43 is a communication interface capable of communicating with an external device via the public network 70.

The plurality of types of databases 44 to 46 includes a growth database 44, a value database 45, and a descending order database 46.

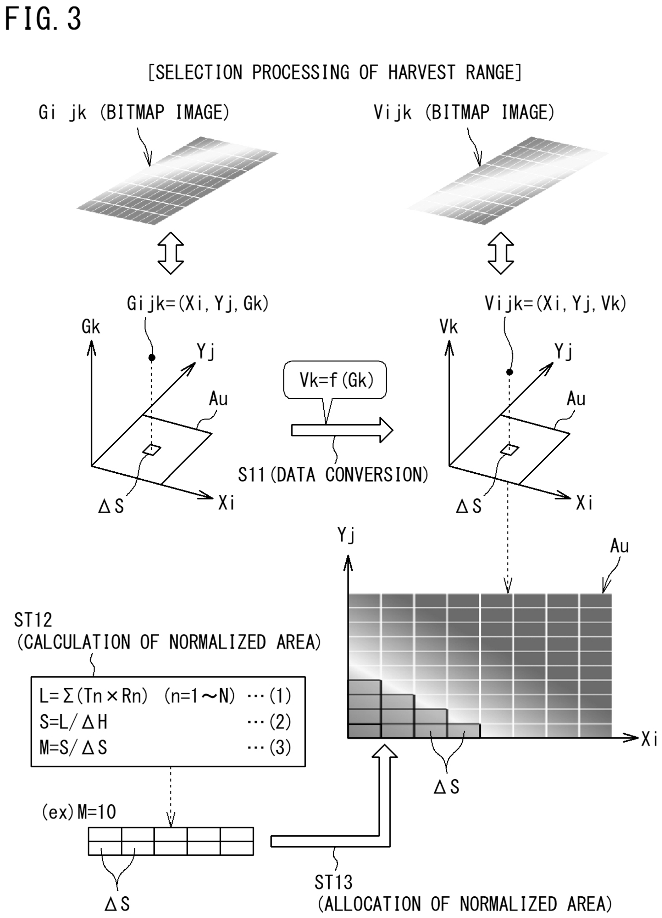

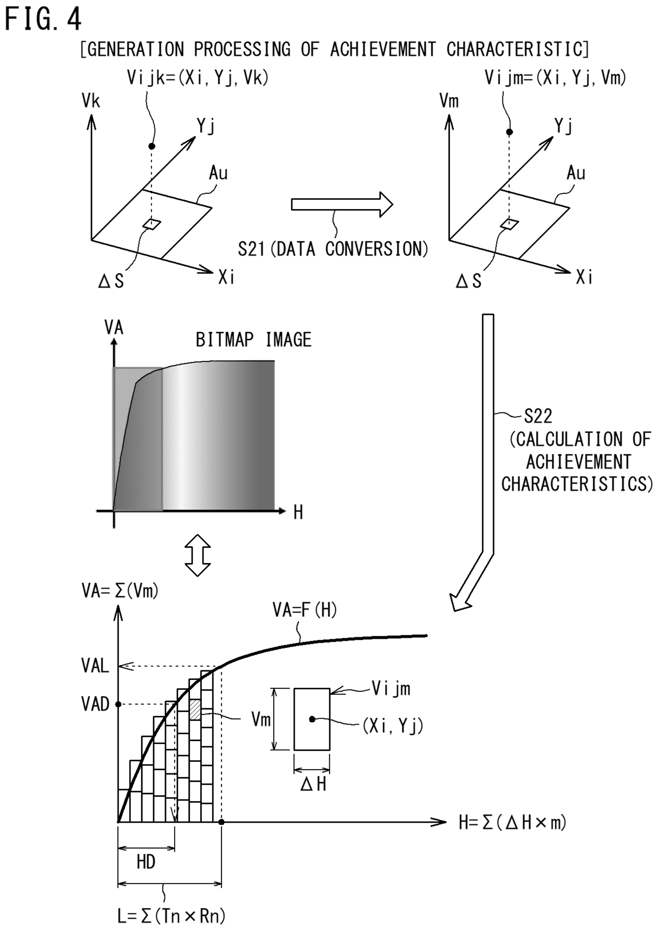

The growth database 44 stores growth data Gijk (see FIG. 3). Value data Vijk (see FIG. 3) is stored in the value database 45. The descending order database 46 stores descending order data Vijm (see FIG. 4). Details of these pieces of data Gijk, Vijk, and Vijm will be described later.

The computer program 47 includes a program for causing the control device 41 to execute "selection processing of a harvest range" (step S10: see FIG. 3) and "generation processing of an achievement characteristic" (step S20: see FIG. 4) as processing accompanying the work plan creation processing.

The selection processing of a harvest range is processing of selecting a harvest range for the vineyard Au on the basis of the value data Vijk. The generation processing of an achievement characteristic is processing of generating an achievement characteristic F indicating a characteristic of an achievement (a cumulative value of values) with respect to a yield on the basis of the value data Vijk.

[Selection Processing of Harvest Range]

FIG. 3 is an explanatory diagram illustrating an example of selection processing of a harvest range executed by the control device 41 of the management server 40. Hereinafter, the definition of the parameter used for the selection processing of the harvest range will be described, and then the content of the selection processing will be described.

(Xi, Yj): Planting position

The planting position (Xi, Yj) is, for example, the location of the trunk of the tree of grape 3, and is defined by an absolute coordinate system such as latitude and longitude or a relative coordinate system based on a predetermined position.

The planting position (Xi, Yj) may be a point (for example, a center of gravity point) representing a location of a trunk of a plurality of trees. "Xi" is a position in the X direction (i is an identification number of a coordinate value in the X direction), and "Yj" is a position in the Y direction (j is an identification number of a coordinate value in the Y direction).

Gk: Growth degree

Growth degree Gk is an index representing the degree of growth of the grape 3. The growth degree is a vegetation index such as NDVI. "k" is an identification number of the value of the growth degree and the next crop value.

Vk: Crop value

Crop value Vk is an index representing the value of the grape 3 at the present time. As the index, for example, a sales price per unit weight of the grape 3, a component value of the grape 3, and the like can be adopted. As the component value, at least one of sugar content, acidity, or a pH value may be employed.

Gijk: Growth data

Growth data Gijk is data representing the growth degree Gk of the grape 3 for each planting position (Xi, Yj). The growth data Gijk is defined by the following three-dimensional vector.

$$Gijk=(Xi,\ Yj,\ Gk)$$

The data format of the growth data Gijk may be either a digital map format or a table format. Growth data in a digital map format is referred to as a "growth map". In a case where the growth map is displayed on the display, for example, as illustrated in FIG. 3, the growth map can be displayed as a bitmap image in which the size of the growth degree Gk is expressed by color, shade, or the like.

Vijk: Value data

The value data Vijk is data representing the crop value Vk for each planting position (Xi, Yj). The value data Vijk is defined by the following three-dimensional vector.

$$Vijk=(Xi,\ Yj,\ Vk)$$

The data format of the value data Vijk may be either a digital map format or a table format. Note that the value data in the digital map format is referred to as a "value map". In a case where the value map is displayed on the display, for example, as illustrated in FIG. 3, the value map can be displayed as a bitmap image representing the size of the crop value Vk by color, shade, or the like.

$\Delta S$: Unit area ($m^2$)

Unit area ΔS is an area having a predetermined shape having a unit area including a planting position (Xi, Yj). The shape of the area is preferably, for example, a rectangle, but may be a shape other than a rectangle such as an ellipse or a hexagon. The unit area of the area can be set in advance according to the planting interval of the trees of the grapes 3 and the like.

$$\Delta H: \qquad \text{Unit yield (kg/m}^2\text{)}$$

Unit yield ΔH is the expected yield (kg/m$^2$) of the grape 3 in the unit area ΔS. The unit yield ΔH can be set in advance according to a statistical value (for example, an average value or a median value) of the number of grapes 3 grown on trees included in the unit area ΔS. In addition, the unit yield ΔH may be set to a different value for each variety of the grape 3.

$$\text{Tn}: \qquad \text{Harvest time (h)}$$

Harvest time Tn is a time during which the worker 1 can perform harvest in a predetermined period (for example, one day to one week). "n" is an identification number of the worker 1.

The harvest time Tn can be set to a different value for each worker 1 according to, for example, a future working time zone adjusted by the management user 2 with each worker 1.

$$\text{Rn}: \qquad \text{Harvest efficiency (kg/h)}$$

Harvest efficiency Rn is a yield that can be harvested by the worker 1 per unit time.

The harvest efficiency Rn can be set to a different value for each worker 1 according to the skill level of each worker, for example, by the management user 2. The harvest efficiency Rn may be set to a different value for each variety.

$$\text{L}: \qquad \text{Harvestable amount (kg)}$$

The harvestable amount L is a yield of the grape 3 that can be obtained in a predetermined period (for example, one day to one week). The harvestable amount L is defined by the following formula.

$$L = \Sigma(Tn \times Rn)\ (n = 1 \text{ to } N)\dots\dots \quad (1)$$

However, "N" is the total number of workers 1 who can be mobilized during a predetermined period.

$$\text{S}: \qquad \text{Harvestable area (m}^2\text{)}$$

Harvestable area S is an area where the worker 1 can execute harvesting in a predetermined period (for example, one day to one week). The harvestable area S is defined by the following formula.

$$S = L/\Delta H\dots\dots(2)$$

$$\text{M}: \qquad \text{Normalized area (pieces)}$$

Normalized area M is a conversion value in a case where the harvestable area S is normalized by the number of unit areas ΔS. The normalized area M is defined by the following formula.

$$M = S/\Delta S = (L/\Delta H)/\Delta S\dots\dots(3)$$

As illustrated in FIG. 3, the harvest range selection processing (step S10 in FIG. 2) includes the following processing.

Step S11: Data conversion
Step S12: Calculation of normalized area
Step S13: Allocation of normalized area

(Data conversion: step S11)

The data conversion is processing of converting the growth data Gijk into the value data Vijk.

Specifically, the data conversion is processing of converting the growth degree Gk of the growth data Gijk into the crop value Vk using a predetermined conversion formula ($Vk = f(Gk)$). The predetermined conversion formula is, for example, an approximate formula representing a correlation between the growth degree Gk and the crop value Vk. The approximate formula is defined in advance according to the type of the crop value Vk on the basis of, for example, past statistical data.

(Calculation of normalized area: step S12)

Calculation of the normalized area M is processing of calculating the normalized area M using the above-described Formulas (1) to (3). Specifically, the calculation of the normalized area M includes the following procedure.

Procedure 1: The harvestable amount L is calculated using Formula (1).

In the input information of Formula (1), the harvest time Tn and the total number N are notified by the management terminal 30. The harvest efficiency Rn of the worker 1 is a setting value registered in advance in the storage device 42 of the management server 40.

Procedure 2: The harvestable area S is calculated using Formula (2).

The unit yield ΔH which is the input information of Formula (2) is a setting value registered in advance in the storage device 42 of the management server 40.

Procedure 3: The normalized area M is calculated using Formula (3).

The unit area ΔS which is the input information of Formula (3) is a setting value registered in advance in the storage device 42 of the management server 40.

(Allocation of normalized area: step S13)

The allocation of the normalized area M is processing of allocating the normalized area M corresponding to the harvestable area S calculated in step S12 to the planting position (Xi, Yj) of the value data Vijk based on a predetermined allocation logic. As the predetermined allocation logic, for example, the following logic can be adopted.

Logic 1:

The unit area ΔS of the planting position (Xi, Yj) where the working value Vk is equal to or more than the predetermined threshold THv is set as an allocation target. The threshold THv is registered in advance in the storage device 42 of the management server 40 for each type of the crop value Vk by the management user 2, for example.

When logic 1 is adopted, the unit area Δ that does not satisfy the crop value Vk desired by the management user 2 is excluded from the allocation target. Thus, the harvest work of the grape 3 having a low crop value Vk is avoided. Therefore, the labor force of the worker 1 can be appropriately allocated.

Logic 2:

Among the unit areas ΔS of the planting position (Xi, Yj) where the working value Vk is equal to or more than the threshold THv, the unit area Δ of the planting position (Xi, Yj) where the crop value Vk is high is preferentially set as the allocation target.

When logic 2 is adopted, since the planting position (Xi, Yj) having the highest crop value Vk is included in the harvest range, the grape 3 having the high crop value Vk can be harvested early.

Logic 3:

Any unit area ΔS is first selected from the unit areas ΔS of the planting positions (Xi, Yj) where the working value Vk is equal to or more than the threshold THv, and from the second and subsequent unit areas, the unit area ΔS having a short distance from the first unit area ΔS is preferentially set as the allocation target.

When logic 3 is adopted, since the allocation target is determined on the basis of the distance from the second time on, it is possible to select the harvest range in which the movement distance of the worker 1 is short.

In the example of FIG. 3, value data (value map) Vijk is illustrated in which the value of the normalized area M is "10", and the crop value Vk increases as it is closer to the origin of the vineyard Au.

In this case, for example, when the above-described logic 1 is applied, the harvest range including the 10 unit areas ΔS is assigned in a right triangle shape with the origin of the farm field Au as a right angle point.

[Generation Processing of Achievement Characteristic]

FIG. 4 is an explanatory diagram illustrating an example of generation processing of an achievement characteristic executed by the control device 41 of the management server 40. Hereinafter, the definition of the parameter used for the generation processing of the achievement characteristic will be described, and then the content of the generation processing will be described. However, the description of the parameters described above is omitted.

Vm: Descending order value

The descending order value Vm is data obtained by rearranging the values of the crop values Vk in descending order. "m" is an identification number of the value of the descending order value.

Vijm: Descending order data

The descending order data Vijm is data representing the descending order value Vm at the planting position (Xi, Yj). The descending order data Vijm is defined by the following three-dimensional vector.

$$Vijm = (Xi,\ Yj,\ Vm)$$

The data format of the descending order data Vijm may be either a digital map format or a table format. Note that the descending order data in the digital map format is referred to as a "descending order map".

H: High value yield (kg)

The high value yield H is a yield when the harvest work is performed in descending order of value of the grape 3, that is, a yield when the harvest work is performed from the unit area ΔS having a high descending order value Vm. The high value yield H is defined by the following formula.

$$H = \Sigma(\Delta H \times m)(m = 1,\ 2......)......(4)$$

VA: Harvest achievement

Harvest achievement VA is a cumulative value of values in a case where the harvest work is performed in descending order of value of the grape 3, that is, an integrated value of the descending order value Vm in a case where the harvest work is performed from the unit area ΔS in which the descending order value Vm is high. The harvest achievement VA is defined by the following formula:

$$VA = \Sigma\,(Vm)(m = 1, 2......)......(5)$$

F: Achievement characteristics

The achievement characteristic F is a parameter representing a characteristic of an achievement (cumulative value of values) with respect to the yield of the grape 3. In the present embodiment, the achievement characteristic F is defined as a function representing the relationship between the high value yield H and the harvest achievement VA. That is, the achievement characteristic F is a function defined by the following formula.

$$VA = F\,(H)......(6)$$

In a case where the graph of the achievement characteristic F is displayed on the display, for example, as illustrated in FIG. 4, the graph can be displayed as a bitmap image in which the magnitude of the descending order value Vm used for the calculation of the achievement characteristic F is expressed by color, shade, or the like.

As illustrated in FIG. 4, the generation processing of the achievement characteristic (step S20 in FIG. 2) includes the following processing.

Step S21: Data conversion
Step S22: Calculation of achievement characteristics

(Data conversion: step S21)

The data conversion is processing of converting the value data Vijk into the descending order data Vijm. Specifically, the data conversion includes the following procedure.

Procedure 1: The value data Vijk is arranged in descending order of the values of the crop values Vk.

Procedure 2: The identification number k is replaced with an identification number m to generate a descending order value Vm.

Procedure 3: Data including the descending order value Vm for each planting position (Xi, Yj) is defined as descending order data Vijm.

(Calculation of achievement characteristics: step S22)

The calculation of the achievement characteristic F is processing of calculating the achievement characteristic F of the vineyard Au using the descending order value Vm obtained in step S21. Specifically, the calculation of the achievement characteristic F includes the following steps.

Step 1: The identification number m of the descending order value Vm is set to an initial value (= 1).

Step 2: The high value yield H is calculated using Formula (4).

Step 3: The harvest achievement VA is calculated using Formula (5).

Step 4: The calculated value of H and the calculated value of VA are plotted on an orthogonal coordinate in which the horizontal axis is H and the vertical axis is VA.

Step 5: The identification number m is incremented, and steps 2 to 4 are repeated.

Step 6: When the identification number m reaches the final value, the plotting is ended.

Step 7: A line obtained by connecting adjacent points of the plotted point group by a straight line or a curve is defined as an achievement characteristic F of Formula (6). Note that, in a case where an abnormal value is included in either the calculated value of H or the calculated value of VA, the complement processing may be performed by excluding the abnormal value.

Harvest characteristic F of FIG. 4 can be used for the following calculation processing.

Calculation processing 1: Calculation of "possible harvest achievement VAL"

Calculation processing 1 is processing of calculating a harvest achievement VA with respect to the harvestable amount L in the achievement characteristic F. Hereinafter, the harvest achievement VA with respect to the harvestable amount L is referred to as a "possible harvest achievement VAL". Specifically, the possible harvest achievement VAL is calculated by the following Formula (7).

$$VAL = F\ (L)......(7)$$

Calculation processing 2: Calculation of "target yield HD"

The calculation processing 2 is processing of calculating the high value yield H necessary for obtaining the harvest achievement VA desired by the management user 2 in the achievement characteristic F. Hereinafter, the desired harvest achievement VA is referred to as "target achievement VAD", and the high value yield H necessary for this is referred to as "target yield HD". Specifically, the target yield HD is calculated by the following Formula (8). Note that "F$^{-1}$" is an inverse function of the achievement characteristic F.

$$HD = F^{-1}\ (VAD)......(8)$$

[Use Example of Selection Processing in Work Plan]

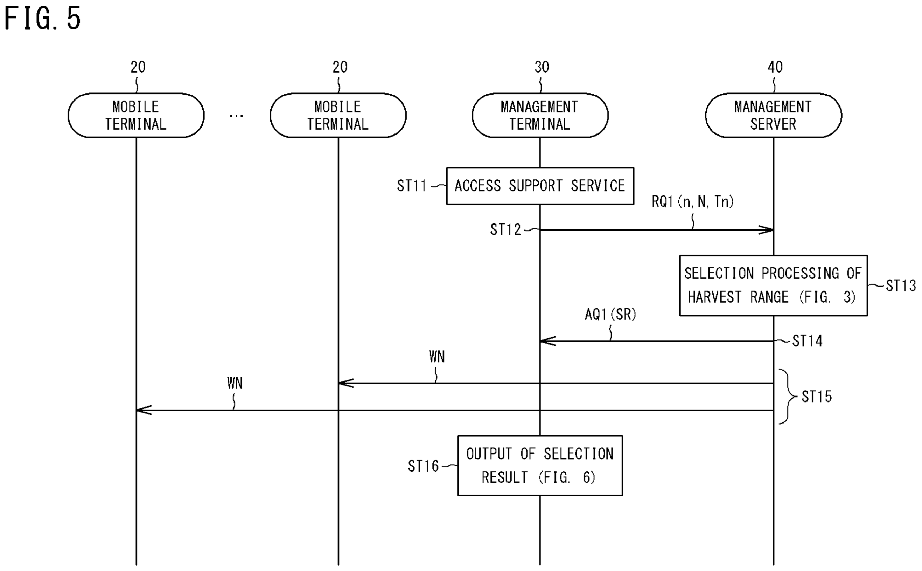

FIG. 5 is a sequence diagram illustrating a use example of the selection processing in the work plan.

As illustrated in FIG. 5, after accessing the support service (step ST11), the management terminal 30 transmits a work plan creation request RQ1 to the management server 40 (step ST12).

The creation request RQ1 includes the identification number n of the worker 1, the total number N, and the harvest time Tn of each worker 1. The identification number n can be determined from identification information such as the name of the worker 1.

Next, the management server 40 executes harvest range selection processing (step ST13).

Specifically, the control device 41 of the management server 40 selects the harvest range in the value data Vijk by executing the above-described selection processing (FIG. 3) using the received identification number n, total number N, and harvest time Tn as input information. In addition, the control device 41 outputs a selection result SR to the communication device 43. The selection result SR includes, for example, value data (value map) Vijk including the selected harvest range.

Next, the management server 40 transmits a creation response AQ1 including the selection result SR to the management terminal 30 (step ST14).

In addition, the management server 40 transmits the work content WN (for example, a harvest position, a time zone, and the like) for each worker 1 constituting the selection result SR to the mobile terminal 20 of each worker 1 (step ST15). However, the notification of the work content WN to each mobile terminal 20 may be performed by the management terminal 30.

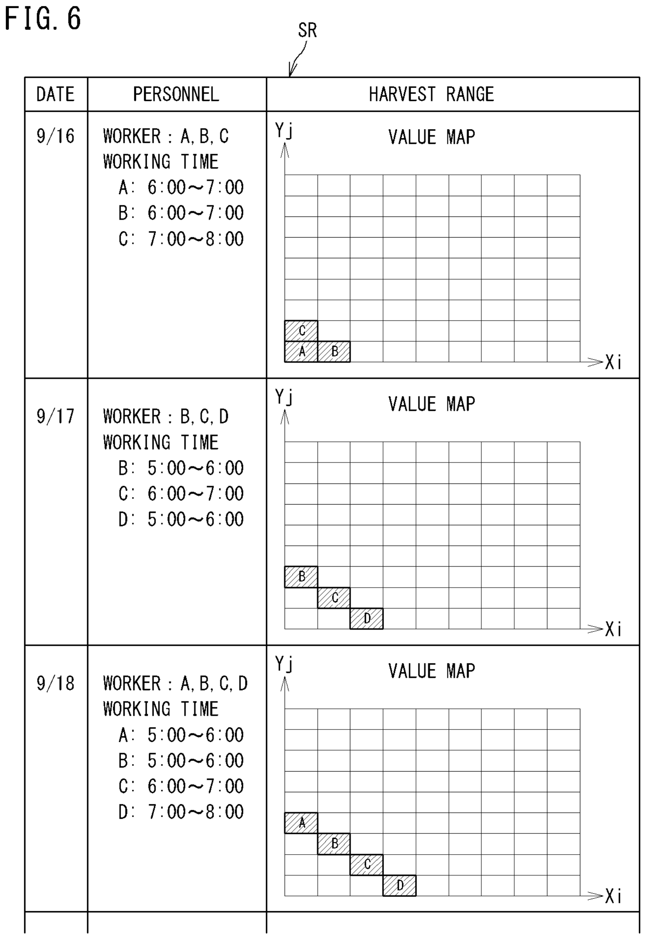

Next, the management terminal 30 outputs the selection result SR received from the management server 40 (step ST16). This output is, for example, processing of displaying the selection result SR on the display of the management terminal 30. FIG. 6 is a diagram illustrating an example of a display screen of the selection result SR in the management terminal 30.

As illustrated in FIG. 6, the display screen of the selection result SR includes fields of "date", "personnel", and "harvest range".

In the fields of date and personnel, input information set by the management user 2 is written. In the illustrated example, the personnel on September 16 are workers A, B, and C (all are names), the personnel on September 17 are workers B, C, and D (all are names), and the personnel on September 18 are workers A, B, C, and D (all are names). In addition, it is assumed that the working time of the workers A, B, C, and D is as illustrated.

In the field of the harvest range, a value map Vijl including the harvest range selected by the selection processing (FIG. 3) is displayed. Note that the horizontal axis represents Xi and the vertical axis represents Yj.

In FIG. 6, as an example, the selection result SR of the harvest work in a case where the predetermined period is three days from September 16 to September 18 is illustrated. Specifically, the following harvest range (hatched portion in the drawing) is displayed as the harvest range to be executed in each schedule.

Harvest range for September 16

Planting position (X1, Y1) $\rightarrow$ worker A
Planting position (X2, Y1) $\rightarrow$ worker B
Planting position (X1, Y2) $\rightarrow$ worker C

Harvest range for September 17

Planting position (X1, Y3) → worker B
Planting position (X2, Y2) → worker C
Planting position (X3, Y1) → worker D

Harvest range for September 18

Planting position (X1, Y4) → worker A
Planting position (X2, Y3) → worker B
Planting position (X3, Y2) → worker C
Planting position (X4, Y1) → worker D

As illustrated in FIG. 6, if the selection result (harvest range) SR of the harvest range is superimposed and displayed on the value map Vijk of the farm field Au, the management user 2 can determine at a glance from where the harvest work should be performed in the vineyard Au, and a display mode with excellent visibility is obtained.

[First Use Example of Achievement Characteristic in Work Plan]

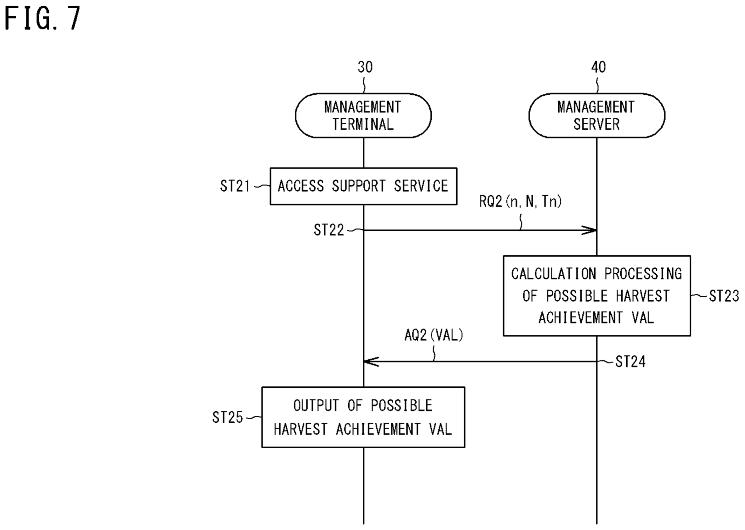

FIG. 7 is a sequence diagram illustrating a first use example of the achievement characteristic in the work plan.
As illustrated in FIG. 7, after accessing the support service (step ST21), the management terminal 30 transmits a calculation request RQ2 of a harvest achievement to the management server 40 (step ST22).
The calculation request RQ2 includes the identification number n of the worker 1, the total number N, and the harvest time Tn of each worker 1. The identification number n can be determined from identification information such as the name of the worker 1.
Next, the management server 40 executes calculation processing of the possible harvest achievement VAL (step ST23). Specifically, the control device 41 of the management server 40 calculates the harvestable amount L using the received identification number n, the total number N, and the harvest time Tn as input information.
In addition, the control device 41 calculates the possible harvest achievement VAL by applying the calculated harvestable amount L to Formula (7) regarding the achievement characteristic F.
Next, the management server 40 transmits a calculation response AQ2 including the possible harvest achievement VAL to the management terminal 30 (step ST24).
Next, the management terminal 30 outputs the possible harvest achievement VAL received from the management server 40 (step ST25). This output is, for example, processing of displaying the numerical value of the possible harvest achievement VAL itself or the graph of the achievement characteristic F including the numerical value of the possible harvest achievement VAL (see FIG. 4) on the display of the management terminal 30.
As described above, when the possible harvest achievement VAL which is the harvest achievement VA corresponding to the harvestable amount L in the achievement characteristic F is transmitted to the management terminal 30, it is possible to notify the management user 2 in advance of the maximum harvest achievement VA obtained by the currently available labor.

[Second Use Example of Achievement Characteristic in Work Plan]

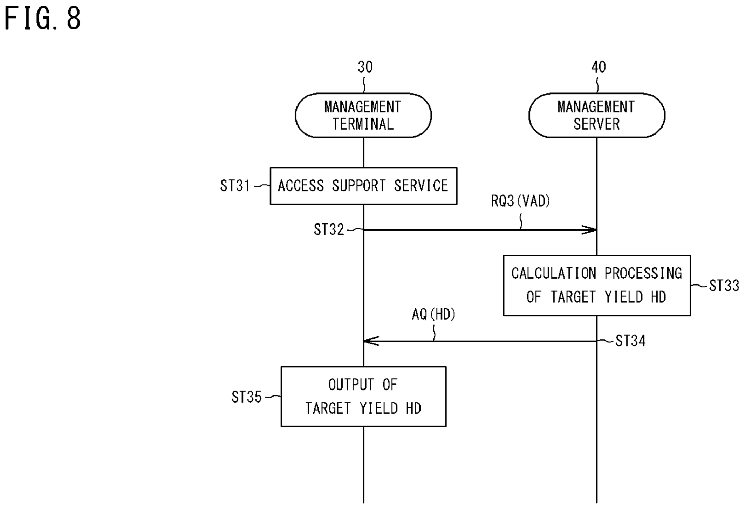

FIG. 8 is a sequence diagram illustrating a second use example of the achievement characteristic in the work plan.
As illustrated in FIG. 8, after accessing the support service (step ST31), the management terminal 30 transmits a yield calculation request RQ3 to the management server 40 (step ST32).
The devising request RQ3 includes the target harvest achievement VAD which is the harvest achievement VA desired by the management user 2.
Next, the management server 40 executes calculation processing of the target yield HD (step ST33). Specifically, the control device 41 of the management server 40 calculates the target yield HD by applying the received target harvest achievement VAD to Formula (8) related to the inverse function of the achievement characteristic F.
Next, the management server 40 transmits a calculation response AQ3 including the target yield HD to the management terminal 30 (step ST34).
Next, the management terminal 30 outputs the target yield HD received from the management server 40 (step ST35). This output is, for example, processing of displaying the numerical value of the target yield HD itself or the graph of the achievement characteristic F including the numerical value of the target yield HD (see FIG. 4) on the display of the management terminal 30.
As described above, when the target yield HD which is the high value yield H corresponding to the target harvest achievement VAD in the achievement characteristic F is transmitted to the management terminal 30, it is possible to notify the management user 2 of the high value yield H necessary for achieving the desired harvest achievement VA in advance.

[Modification 1: Prediction Method of Growth Data]

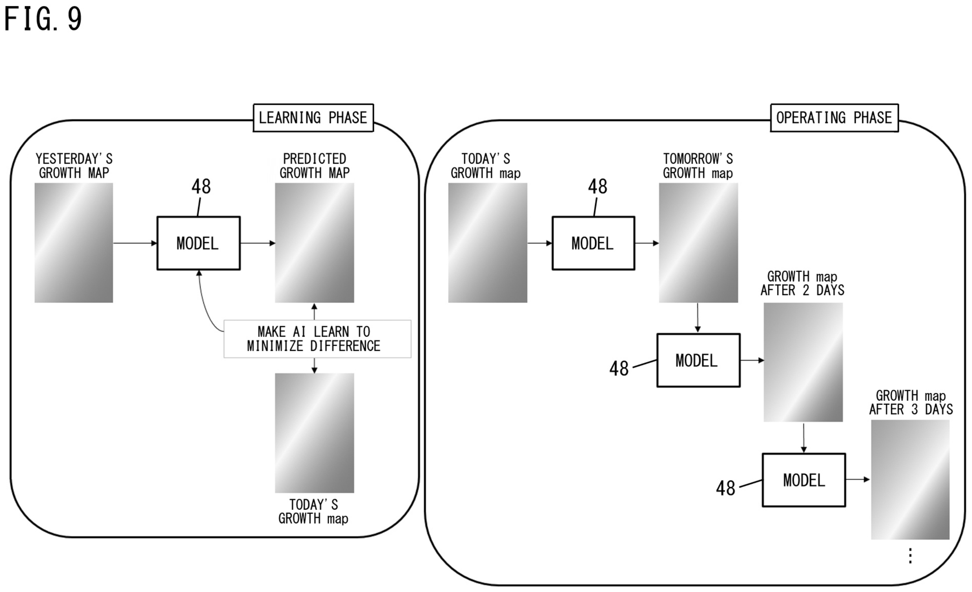

In the above-described embodiment, the growth data (growth map) Vijk including the growth degree Gk in a relatively near future (for example, after one day) may be predicted by the model 48 (see FIG. 9) that is a learning device capable of machine learning.
The model 48 is a type of the program 47 stored in the storage device 42, and may employ, for example, a neural network including at least one hidden layer between an input layer and an output layer.
FIG. 9 is an explanatory diagram illustrating an example of a prediction method of the future growth data Vijk.
In FIG. 9, the model 48 includes a learning device having the growth degree Gk of yesterday at the planting position (Xi, Yj) as input data (teacher data) and the growth degree Gk of today at the planting position (Xi, Yj) as output data. The training of the model 48 is performed by adjusting the weighting between the nodes in the model 48 so that the difference between the input data and the output data is minimized (learning phase).
When the accuracy of the model 48 is confirmed by the training for the predetermined period, the model 48 is used for the prediction processing of the growth data Vijk of the next day (operating phase).
Specifically, today's growth data Vijk is input to the model 48, and tomorrow's growth data Vijk is output from the model 48. Similarly, the tomorrow's growth data Vijk is input to the model 48, and the growth data Vijk after two days is output from the model 48. The same applies to prediction after three days.

[Modification 2: Labor Saving of Growth Data]

In the above-described embodiment, growth data (growth map) Vijk may be sampled sparsely, and data obtained by performing predetermined processing such as predetermined total variation (TV) regularization on the sampling data may be used as the growth data Vijk used for the selection processing and the like.
In this way, since the number of samples of the source data is small, there is an advantage that the storage capacity in the storage device 42 can be reduced as compared with the case of storing the growth data Vijk including the growth degrees Vk of all the planting positions (Xi, Yj).

[Other Modifications]

The embodiment disclosed herein is illustrative in all respects and is not restrictive. The scope of rights of the present invention is not limited to the above-described embodiments, and includes all modifications within the scope equivalent to the configurations described in the claims.
In the above-described embodiment, the "work subject" for harvesting the grapes 3 is not limited to the human worker 1, and may be a harvesting robot that automatically travels in the vineyard Au. In this case, the harvest of the grapes 3 by the harvesting robot may be either a remote operation or an automatic harvest.
In the above-described embodiment, the crop 3 is not limited to the grape 3 as long as the yield can be almost accurately expected with respect to the planting position (Xi, Yj).

REFERENCE SIGNS LIST

| 1 | worker (work subject) |
|---|---|
| 2 | management user |
| 3 | grape (crop) |
| 20 | mobile terminal |
| 30 | management terminal |
| 40 | management server (information processing device) |
| 41 | control device |
| 42 | storage device |
| 43 | communication device |
| 44 | growth database |
| 45 | value database |
| 46 | descending order database |
| 47 | computer program |
| 48 | model |

| 50 | information provision server |
|---|---|
| 60 | flying device |
| 70 | public network |
| 80 | radio base station |
| 200 | work support system |
| F | farm |
| Au | farm field (vineyard) |
| (Xi, Yi) | planting position |
| Vijk | growth data |
| Gijk | value data |
| Gijm | descending order data |

**Claims**

1. An information processing device comprising:

   a storage device that stores value data representing a crop value of a crop for each planting position; and
   a control device that executes selection processing of a harvest range on a basis of the value data, wherein the selection processing includes:

   processing of calculating a harvestable area in which a work subject is allowed to execute harvesting in a predetermined period; and
   processing of allocating the harvestable area to the planting position where the crop value is equal to or more than a predetermined threshold.

2. The information processing device according to claim 1, wherein

   the selection processing includes
   processing of preferentially allocating the harvestable area to the planting position having a high crop value.

3. The information processing device according to claim 1, wherein

   the selection processing includes
   processing of arbitrarily selecting a first planting position as the planting position, and preferentially allocating second and subsequent planting positions that are close in distance from the first planting position.

4. The information processing device according to any one of claims 1 to 3, wherein

   the selection processing
   includes processing of calculating the harvestable area on a basis of a harvest time during which the work subject is allowed to execute harvesting, harvest efficiency of the work subject, and a total number of the work subjects.

5. The information processing device according to any one of claims 1 to 3, wherein

   the storage device
   stores growth data indicating a growth degree of the crop for each of the planting positions, and
   the control device
   includes processing of converting the growth data into the value data.

6. The information processing device according to any one of claims 1 to 3, wherein

   the control device
   outputs the value data including the harvest range that has been selected as a selection result.

7. The information processing device according to any one of claims 1 to 3, wherein

   the control device
   is capable of executing calculation processing of an achievement characteristic indicating a relationship between a high value yield and a harvest achievement defined below.

High value yield: Yield when harvest work is performed in descending order of crop values

Harvest achievement: Cumulative value of crop values when harvest work is performed in descending order of crop values

8. The information processing device according to claim 7, wherein

the control device
calculates a harvestable amount that is a yield of the crop that is achievable during the predetermined period, and
calculates a possible harvest achievement that is the harvest achievement corresponding to the harvestable amount on a basis of the harvestable amount and the achievement characteristic.

9. The information processing device according to claim 7, wherein

the control device
acquires a target harvest achievement that is the harvest achievement desired by a user, and
calculates a target yield that is the high value yield corresponding to the target harvest achievement on a basis of the target harvest achievement and the achievement characteristic.

10. A selection method of a harvest range executed by an information processing device, the selection method comprising:

a step of storing value data representing a crop value of a crop for each planting position; and
a step of executing selection processing of the harvest range on a basis of the value data, wherein
the selection processing includes:

processing of calculating a harvestable area in which a work subject is allowed to execute harvesting in a predetermined period; and
processing of allocating the harvestable area to the planting position where the crop value is equal to or more than a predetermined threshold.

11. A computer program for causing a computer to function as an information processing device, the computer program causing the computer to function as:

a storage device that stores value data representing a crop value of a crop for each planting position; and
a control device that executes selection processing of a harvest range on a basis of the value data, wherein
the selection processing includes:

processing of calculating a harvestable area in which a work subject is allowed to execute harvesting in a predetermined period; and
processing of allocating the harvestable area to the planting position where the crop value is equal to or more than a predetermined threshold.

FIG. 1

# FIG. 2

# FIG. 3

[SELECTION PROCESSING OF HARVEST RANGE]

Gijk (BITMAP IMAGE)

Vijk (BITMAP IMAGE)

Gijk=(Xi, Yj, Gk)

Vijk=(Xi, Yj, Vk)

$V_k = f(G_k)$

S11 (DATA CONVERSION)

ST12
(CALCULATION OF NORMALIZED AREA)

$$L = \Sigma(T_n \times R_n) \quad (n = 1 \sim N) \quad \cdots (1)$$
$$S = L / \Delta H \quad \cdots (2)$$
$$M = S / \Delta S \quad \cdots (3)$$

(ex) M=10

$\Delta S$

ST13
(ALLOCATION OF NORMALIZED AREA)

$\Delta S$

# FIG. 4

[GENERATION PROCESSING OF ACHIEVEMENT CHARACTERISTIC]

$Vijk=(Xi, Yj, Vk)$

$Vijm=(Xi, Yj, Vm)$

S21 (DATA CONVERSION)

BITMAP IMAGE

S22
(CALCULATION OF
ACHIEVEMENT
CHARACTERISTICS)

$VA=\Sigma(Vm)$

$VA=F(H)$

$Vijm$

$(Xi, Yj)$

$H=\Sigma(\Delta H \times m)$

$L=\Sigma(Tn \times Rn)$

FIG. 5

# FIG. 6

SR

| DATE | PERSONNEL | HARVEST RANGE |
|------|-----------|---------------|
| 9/16 | WORKER : A, B, C<br>WORKING TIME<br>　A： 6:00〜7:00<br>　B： 6:00〜7:00<br>　C： 7:00〜8:00 | VALUE MAP |
| 9/17 | WORKER : B, C, D<br>WORKING TIME<br>　B： 5:00〜6:00<br>　C： 6:00〜7:00<br>　D： 5:00〜6:00 | VALUE MAP |
| 9/18 | WORKER : A, B, C, D<br>WORKING TIME<br>　A： 5:00〜6:00<br>　B： 5:00〜6:00<br>　C： 6:00〜7:00<br>　D： 7:00〜8:00 | VALUE MAP |

FIG. 7

| MANAGEMENT TERMINAL | 30 | | MANAGEMENT SERVER | 40 |

ST21 — ACCESS SUPPORT SERVICE

RQ2 (n, N, Tn)

ST22

ST23 — CALCULATION PROCESSING OF POSSIBLE HARVEST ACHIEVEMENT VAL

ST24

AQ2 (VAL)

ST25 — OUTPUT OF POSSIBLE HARVEST ACHIEVEMENT VAL

# FIG. 8

EP 4 738 230 A1

# FIG. 9

EP 4 738 230 A1

**EP 4 738 230 A1**

## INTERNATIONAL SEARCH REPORT

| International application No. |
|---|
| **PCT/JP2024/018728** |

### A. CLASSIFICATION OF SUBJECT MATTER

*G06Q 50/02*(2024.01)i; *A01G 7/00*(2006.01)i
FI:   G06Q50/02; A01G7/00 603

According to International Patent Classification (IPC) or to both national classification and IPC

### B. FIELDS SEARCHED

Minimum documentation searched (classification system followed by classification symbols)

G06Q50/02; A01G7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-040589 A (PANASONIC INTELLECTUAL PROPERTY MANAGEMENT CO., LTD.) 18 March 2021 (2021-03-18) paragraphs [0048]-[0054], [0090]-[0102], [0108]-[0110] | 1, 3-6, 10-11 |
| A | | 2, 7-9 |
| Y | JP 2023-013366 A (YANMAR HOLDINGS CO., LTD.) 26 January 2023 (2023-01-26) paragraph [0052] | 1, 3-6, 10-11 |
| A | JP 2019-083746 A (YANMAR CO., LTD.) 06 June 2019 (2019-06-06) entire text, all drawings | 1-11 |
| A | JP 2018-110037 A (KUBOTA CORPORATION) 12 July 2018 (2018-07-12) entire text, all drawings | 1-11 |
| A | JP 2022-094828 A (HAPSMOBILE INC.) 27 June 2022 (2022-06-27) entire text, all drawings | 1-11 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

25

**INTERNATIONAL SEARCH REPORT**

| International application No. |
| --- |
| **PCT/JP2024/018728** |

## C.    DOCUMENTS CONSIDERED TO BE RELEVANT

| Category* | Citation of document, with indication, where appropriate, of the relevant passages | Relevant to claim No. |
| --- | --- | --- |
| A | JP 2019-17396 A (ISEKI & CO., LTD.) 07 February 2019 (2019-02-07)<br>entire text, all drawings | 1-11 |

Form PCT/ISA/210 (second sheet) (July 2022)

INTERNATIONAL SEARCH REPORT
Information on patent family members

International application No.

**PCT/JP2024/018728**

| Patent document cited in search report | | | Publication date (day/month/year) | Patent family member(s) | | | Publication date (day/month/year) |
|---|---|---|---|---|---|---|---|
| JP | 2021-040589 | A | 18 March 2021 | NL 1043784 B1 paragraphs [0047]-[0053], [0089]-[0102], [0108]-[0110] | | | |
| JP | 2023-013366 | A | 26 January 2023 | (Family: none) | | | |
| JP | 2019-083746 | A | 06 June 2019 | (Family: none) | | | |
| JP | 2018-110037 | A | 12 July 2018 | (Family: none) | | | |
| JP | 2022-094828 | A | 27 June 2022 | WO 2022/131176 A1 | | | |
| JP | 2019-17396 | A | 07 February 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023106294 A
- WO 2018158821 A
- JP 2013254356 A